(19)

Europäisches
Patentamt
European
Patent Office
Office européen
des brevets

(11)  **EP 2 438 480 B1**

(12)  **EUROPEAN PATENT SPECIFICATION**

(45) Date of publication and mention
of the grant of the patent:
**06.05.2015   Bulletin 2015/19**

(21) Application number: **09845621.3**

(22) Date of filing: **02.06.2009**

(51) Int Cl.:
**G03H 1/08** *(2006.01)*       **G02B 6/12** *(2006.01)*
**G02B 6/124** *(2006.01)*      **G02B 6/43** *(2006.01)*
**G02B 6/28** *(2006.01)*       G02B 5/32 *(2006.01)*

(86) International application number:
**PCT/US2009/003342**

(87) International publication number:
**WO 2010/140997 (09.12.2010 Gazette 2010/49)**

(54)  **AN INTEGRATED PLANAR OPTICAL DEVICE BASED ON DIGITAL PLANAR HOLOGRAPHY**

AUF DIGITALER PLANARER HOLOGRAFIE BASIERENDE INTEGRIERTE PLANARE OPTISCHE
VORRICHTUNG

DISPOSITIF OPTIQUE PLANAIRE INTÉGRÉ BASÉ SUR L'HOLOGRAPHIE PLANAIRE NUMÉRIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**11.04.2012   Bulletin 2012/15**

(73) Proprietor: **Yankov, Vladimir
Washington Township, NJ 07676 (US)**

(72) Inventor: **Yankov, Vladimir
Washington Township, NJ 07676 (US)**

(74) Representative: **Zimmermann & Partner
Patentanwälte mbB
Postfach 330 920
80069 München (DE)**

(56) References cited:
**US-A1- 2003 210 862      US-A1- 2003 210 862
US-A1- 2006 233 493      US-A1- 2006 233 493
US-B2- 7 511 805          US-B2- 7 511 805**

EP 2 438 480 B1

## Description

FIELD OF THE INVENTION

This invention relates to the processing of light or other waves inside planar integrated circuits consisting of a plurality of repeated standard elements such as lasers, amplifiers, detectors, and fast saturated absorbers, interconnected through digital planar holograms. More specifically, the invention relates to a method of digitally processing optical waves and to integrated planar optical devices that operate on the principle of digital planar holography.

BACKGROUND OF THE INVENTION

Processing and transmission of information with light requires creation of integrated optical circuits. While the idea is not novel, integrated circuits with the use of light do not repeat the success of electronic integrated circuits, while most important active and non-linear optic elements like lasers, amplifiers, detectors, and fast saturating absorbers, are routinely made in planar waveguides with microlithography, then diced and connected with optical fibers. It is much like the use of transistors before the invention of electronic integrated circuits. One of the main reasons is the problem of interconnection. Electric current easily follows through bends of a conductor, thereby facilitating interconnections among several layers. The light tends to propagate in a straight line; therefore, interconnections among several layers are difficult. Sometimes active elements are interconnected by ridge waveguides in a single waveguide, but this method is limited due to the crossing of ridge waveguides in a single layer. Thus, there is a great need for interconnecting many optical elements in a single waveguide.

Attempts have been made heretofore to provide planar optical devices by interconnecting many optical devices on a single substrate. For example, U.S. Patent Application Publication No. 20070034730 published in 2007 (inventor T. Mossberg, et al.) discloses a multimode planar waveguide spectral filter that comprises a planar optical waveguide having at least one set of diffractive elements. The waveguide confines in one transverse dimension an optical signal propagating in two other dimensions therein. The waveguide supports multiple transverse modes. Each diffractive element set routes a diffracted portion of the optical signal between input and output ports, the optical signal being one that propagates in the planar waveguide and is diffracted by diffractive elements. The diffracted portion of the optical signal reaches the output port as a superposition of multiple transverse modes. A multimode optical source may launch the optical signal into the planar waveguide through the corresponding input optical port as a superposition of multiple transverse modes. A multimode output waveguide may receive the diffracted portion of the optical signal through the output port. Multiple diffractive element sets may route corresponding diffracted portions of an optical signal between one or more corresponding input and output ports. The device involves the principle of refractive index modulation.

U.S. Patent Application Publication No. 20060233493 published in 2006 (inventor T. Mossberg, et al.) discloses a holographic spectral filter. According to one embodiment, the device of the invention comprises a planar waveguide appropriate to contain a programmed planar holographic spectral filtering device. Input and output signals propagate within the planar holographic substrate in the x-y plane. The planar holographic substrate, or slab, is typically constructed of a material sufficiently transparent at the intended operational wavelength of the device so that unacceptable loss does not accrue from absorption as signals propagate through the programmed holographic device. Typical substrate materials include silica ($SiO_2$), which is transmissive over much of the visible and near-infrared spectral region, polymers, and silicon. The thickness of the planar substrate is preferably set to a value low enough to ensure that only a relatively low number of transverse (z) modes is allowed, or more specifically, that the allowed transverse (z) modes do not experience significant modal dispersion when passing through the programmed holographic device.

U.S. Patent Application Publication No. 20070053635 published in 2007 (inventor D. Iazikov, et al) discloses transmission grating designed by computed interference between simulated optical signals and fabricated by reduction lithography. More specifically, the method comprises computing an interference pattern between a simulated design input optical signal and a simulated design output optical signal and computationally deriving an arrangement of at least one diffractive element set from the computed interference pattern. The interference pattern is computed in a transmission grating region, with the input and output optical signals each propagating through the transmission grating region as substantially unconfined optical beams. The arrangement of the diffractive element set is computationally derived so that when the diffractive element set, thus arranged, is formed in or on a transmission grating, each diffractive element set routes a corresponding diffracted portion of an input optical signal between corresponding input and output optical ports, the signal being one that is incident on and transmitted by the transmission grating. This method can further comprise forming the set of diffractive elements in or on the transmission grating according to the derived arrangement.

U.S. Patent Application Publication No. 20060126992 published in 2006 (inventor T. Hashimoto, et al.) discloses a wave transmission medium that includes an input port and an output port. The first and the second field distributions are obtained by numerical calculations. The first field distribution distributes the forward propagation light launched into the input port. The second field distribution distributes the reverse propagation light resulting from reversely transmitting from the output port side an output field that is sent from the output port when an optical signal is launched into the input port. A spatial refractive index distribution is calculated on the basis of both field distributions such that the phase difference between the propagation light and reverse propagation light is eliminated at individual points (x, z) in the medium. The elements of this system are also mounted on a planar substrate.

U.S. Patent Application Publication No. 20040036933 published in 2004 (inventor V. Yankov, et al.) discloses a planar holographic multiplexer/demultiplexer that is characterized by low manufacturing cost, reduced signal distortion, high wavelength selectivity, high light efficiency, reduced cross-talk, and easy integration with other planar devices at a lower manufacturing cost. The planar waveguide of the device includes a holographic element that separates and combines predetermined (preselected) light wavelengths. The holographic element includes a plurality of holograms that reflect predetermined light wavelengths from an incoming optical beam to a plurality of different focal points, each predetermined wavelength representing the center wavelength of a distinct channel. Advantageously, a plurality of superposed holograms may be formed by a plurality of structures, each hologram reflecting a distinct center wavelength to represent a distinct channel to provide discrete dispersion. When used as a demultiplexer, the holographic element spatially separates light of different wavelengths and when reversing the direction of light propagation, the holographic element may be used as a multiplexer to focus several optical beams having different wavelengths into a single beam containing all of the different wavelengths.

However, in all aforementioned prior-art devices, for transformation of an input beam into an output beam, the inventors use holographic gratings with known functional properties determined by their parameters and geometry. Therefore, positions and optical parameters of the input and output beams strictly depend on the geometry of the grating, and this significantly limits design of the optical structure. Another disadvantage of the known planar holographic devices is that they have a limited number of light-transmitting channels since each holographic pattern element works only with one or two channels.

US 7,511,805 B2 discloses a target plate for positioning components, in particular pipes, having a holographic optical element as a holographic diffusor. By means of the diffusor, radiation striking the target plate in the form of a reference beam can be guided very accurately and virtually without loss into a defined solid angle region. Furthermore, the diffusor may have stochastically distributed structures and thus illuminate the solid angle region homogeneously. By means of the target plate, the visibility of the incident reference beam is increased, and the reference beam can also be detected independently of position.

BRIEF SUMMARY OF THE INVENTION

The object of the present invention is to provide a new integrated planar optical device based on digital planar holography and suitable for simplified manufacturing by microlithography. It is another object to provide a method of digitally processing light waves passing through a digital planar holographic structure. It is a further object to provide a digital planar holographic structure that is formed by creating a plurality of optical holographic pattern elements that control directions and properties of the light beams and that are optimized with respect to given positions of input and output ports irrespective of the geometry of the gratings. It is another object is to provide a planar holographic device capable of operating with a large number of light-transmitting channels.

The method of the invention for digitally processing light waves passing through a digital planar holographic structure consists of making digital and analog light processors on a single chip consisting of a planar waveguide with several standard optical elements repeated many times. According to the invention, there may be active and nonlinear elements like lasers, amplifiers, and fast saturated absorbers that are made in planar semiconductor waveguides by microlithography means and that are interconnected by passive digital planar holograms written in the same waveguide. Each hologram can provide many interconnections. The planar waveguide can be monolithic; for example, the core can be made from a semiconductor like InPGaAs. The difference among lasers, amplifiers, and fast-saturated absorbers may be due to different voltages applied to these elements, different geometry, or chemical composition. Since light absorption in semiconductor holograms creates a problem, it may be eased by applying voltage to holograms or making a hybrid waveguide. Namely, active elements can be made in a semiconductor waveguide, while interconnecting holograms may be written in an attached transparent waveguide made of silica or another transparent material.

A hologram is a combination of millions of sub-wavelength (a fraction of micron) features recorded on a transparent media. A hologram may be a copy of an image or even of an optical device. After replicating an optical device, the hologram may be used instead of the device. Until the 1990s, analog holograms were made with conventional photo materials, copying existing objects only. Digital holography has been made possible when microlithography moved to sub-micron features. By means of calculations, it becomes possible to determine positions of holographic fringes. If the shape of a planar structure is known, as well as the positions of the input and output light beams, the finding of hologram-component coordinates is reduced to the solution of an inverse problem of finding a part of the boundary conditions based on the known functions $f_n (x, y, \omega)$ and $f_{out} (x, y, \omega)$, the structures, shapes, and positions of which have been calculated and which have never existed in reality as optical objects and which are then reproduced by methods of microlithography in the form of actual planar objects.

An inverse problem can be defined as a task wherein the values of some model parameter(s) must be obtained from the observed data.

In particular, the invention relates to the digital processing of lights, wherein chains of lasers, amplifiers, and fast saturating absorbers exhibit two or more attractors. A light logical gate is one example of a device that can be made by this new technology.

The approach of this invention is to characterize a device by Fourier components $fi_n(x,y,\omega)$ and $f_{out}(x,y,\omega)$ of incoming and outgoing waves propagating between two elements and then to use these functions for calculating a desirable holographic pattern. For most applications, it is a variation of the effective refractive index in the following form:

$$\Delta n(x,y) = \int f_{in}(x,y,\omega) f_{out}(x,y,\omega) d\omega.$$

The proposed invention advantageously combines convenience of manufacturing and interconnecting optical elements within a single planar waveguide.

BRIEF DESCRIPTION OF THE DRAWINGS

Fig. 1 is a schematic view that exemplifies a planar structure or a holographic chip of the invention with a digital planar optical holographic pattern.

Fig. 2 is a longitudinal sectional view of the laser diode used in the holographic chip of Fig. 1.

Fig. 3 is a longitudinal sectional view of the planar semiconductor amplifier used in the holographic chip of Fig. 1.

Fig. 4 is a sectional view through the chip in the direction of the longitudinal axis of the planar semiconductor light-beam receiver.

DETAILED DESCRIPTION OF THE INVENTION

The idea of the new planar geometry is to allow light to travel inside a hologram on thousands of wavelengths, thus greatly increasing the possibility to process the light.

Digital planar holography advantageously combines the possibility to write an arbitrary hologram with a long light path inside the hologram. The last technological obstacle was a good-quality blank planar waveguide. The waveguide must be approximately one micron thick, transparent, and very uniform in order to transmit light without distortion. The last condition is the most limiting, but it was mainly resolved by the optical industry to make arrayed waveguide gratings for optical fiber communication devices. After the problems associated with fabrication of sub-wavelength patterns were solved due to the progress in modern microlithography, only one problem needed for successful realization of the digital planar holography remained, i.e., determining the pattern to be written in order to make a desirable device.

By means of calculations, it becomes possible to determine the positions of holographic fringes. If the shape of the planar structure is known, as well as the positions of the input and output light beams, the finding of holographic pattern coordinates is reduced to the solution of an inverse problem of finding a part of the boundary conditions based on the known functions $f_{in}(x,y,\omega)$ and $f_{out}(x,y,\omega)$, the structures, shapes, and positions of which have been calculated and which have never existed in reality as optical objects and which are then reproduced by methods of microlithography in the form of actual planar objects.

The approach of this invention is to characterize a device by Fourier components $f_{in}(x,y,\omega)$ and $f_{out}(x,y,\omega)$ of incoming and outgoing waves and then to use these functions for calculating a desirable holographic pattern. While real devices are three-dimensional, using a two-dimensional Hamiltonian model averaged over the third dimension should be satisfactory for many applications. Since waves propagate freely in a blank waveguide, it becomes possible to write interaction in the form of a Hamiltonian model. Since non-linear wave scattering can be neglected so that the Hamiltonian model can be presented as quadratic with respect to wave amplitude, we can assume linearity with respect to variations of the effective refraction index. Thus the Hamiltonian model can be written as follows:

$$H_{\text{int}} = \int f(x, y, \omega) \Delta n(x, y) f(x, y, \omega) d\omega$$

where $f(x,y,\omega)$ is the total wave function of specified frequency. Since all three functions under the integral sign are oscillating, the interaction is determined by resonances. It may be shown that in order to transform $f_{in}(x,y,\omega)$ into $f_{out}(x,y,\omega)$ one has to create variation of the effective refraction index, in arbitrary units, in the following form:

$$\Delta n(x, y) = \int f_{in}(x, y, \omega) f_{out}(x, y, \omega) d\omega$$

Many variations of the invention will be possible to those skilled in the art. Some variations include correcting the above formula for variation of $f_n(x,y,\omega)$ and $f_{out}(x,y,\omega)$ created by the hologram. To ease manufacturing, the function $\Delta n(x,y)$ should be substituted by binary (two-level) functions, preferably a composition of similar or identical elements. In other words, it is necessary to replace the continuous function $\Delta n = \Delta n (x, y)$ by a discrete function of $\Delta n (x, y)$:

This procedure can be formulated as follows:

$$f_{in}(x, y, \omega) \cong \sum_{n,u} C_{nu} \exp(ik_n r_u) f(\omega)$$

$$f_{out}(x, y, \omega) \cong \sum_{m,v} C_{mv} \exp(-ik_m r_v) f(\omega)$$

where $k_n$ is the wave vector of an incoming wave, and $r_u$ is the distance from the incoming port number u to a current point; $k_m$ is the wave vector of an outgoing wave, and $r_v$ is the distance from the outgoing port number v to the current point; It should be noted that according to the invention, digitization of planar holography consists of replacing the continuous functions $f_{in}(x,y,\omega)$ and $f_{out}(x,y,\omega)$ by finite numbers ("n" and "m") of values as a result of decomposition into the Fourier series. This decomposition is used for replacing $f_{in}(x,y,\omega)$ and $f_{out}(x,y,\omega)$ in the aforementioned formula $\Delta n(x,y)$ = $\int f_{in}(x,y,\omega) f_{out}(x,y,\omega) d\omega$. It is clear that instead of a continuous function $\Delta n = \Delta n (x, y)$, we will obtain a discrete number of values of $\Delta n$ associated with predetermined coordinates that determine positions of the pattern elements of the holographic pattern.

In order to simplify production of the planar digital structure, in the aforementioned calculations, variation of the effective refractive index $\Delta n(x,y)$ can be approximated by a two-level binary function to form the pattern elements of the holographic pattern, e.g., as rectangular dashes.

In particular, the invention relates to the digital processing of light, wherein chains of lasers, amplifiers, and fast saturating absorbers exhibit two or more attractors. A light logical gate is one example of a device that can be made according to this new technology.

Further aspects of the invention will become apparent when considering the drawings and the ensuing description of the preferred embodiments of the invention.

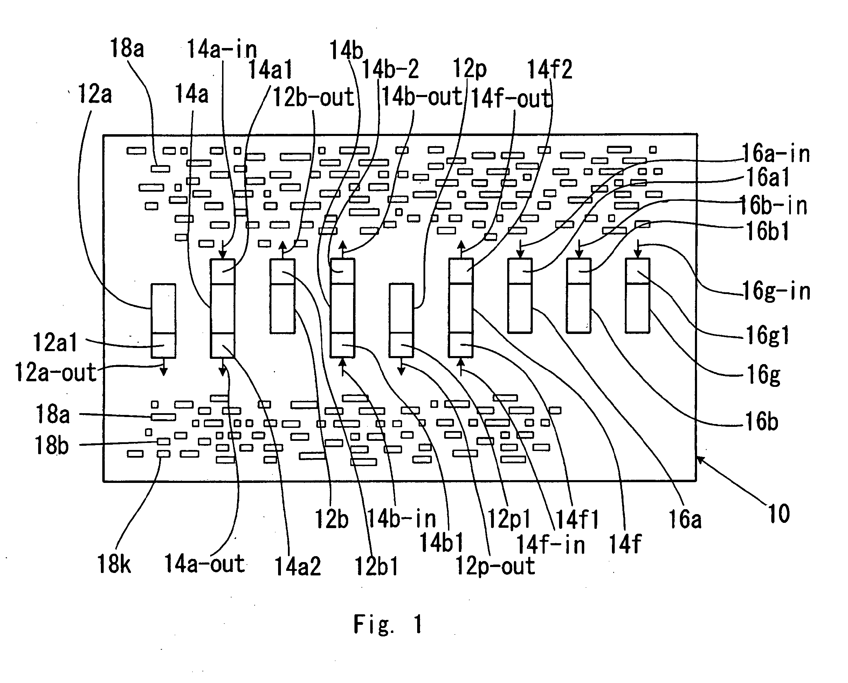

Fig. 1 is a schematic view that exemplifies a planar structure or a holographic chip with a digital planar optical holographic pattern. In this drawing, the planar structure as a whole is designated by reference numeral 10. Reference numerals $12_a$, $12_b$, .......$12_p$ designate active planar optical elements such as semiconductor laser diodes, where "p" is the number of the aforementioned lasers diodes. Although Fig. 1 shows only three laser diodes (p=3), the number "p" may vary in a wide range. Reference numerals 14a, 14b,.... 14f designate planar semiconductor amplifiers, where "f" is the number of such semiconductor amplifiers. As in the case of laser diodes, the number "f" may vary in a wide range. The holographic chip 10 of the illustrated embodiment also contains planar semiconductor receivers 16a, 16b, .... 16g, where "g" is the number of semiconductor receivers.

All above-mentioned planar optical elements are arranged on a common semiconductor substrate made from, e.g., InPGaAs and, depending on the type of the element, may have one or two input/output ports. For example, as shown in Fig. 1, the semiconductor laser diode 12a has only an output port 12a1 for emission of an output light beam 12a-out. In the present embodiment, it is assumed that all three laser diodes 12a, 12b, and 12p are identical and have respective output ports 12a2 and 12p for emission of output light beams 12b-out and 12p-out, respectively. Each of the planar semiconductor amplifiers 14a, 14b,.... 14f has one input port and one output port. For example, the planar semiconductor amplifier 14a has an input port 14a1 and an output port 14a2; the planar semiconductor amplifier 14b has an input port 14a1 and an output port 14b2; and the planar semiconductor amplifier 14f has an input port 14f1 and an output port 14f2. In Fig. 1, reference numerals 14a-in, 14b-in, and 14f-in designate input light beams that enter respective amplifiers 14a, 14b, and 14f. Reference numerals 14a-out, 14b-out, and 14f-out designate output light beams that exit respective amplifiers 14a, 14b, and 14f.

On the other hand, each of the planar semiconductor receivers 16a, 16b, .... 16g has only an input port. In other words, the planar semiconductor receiver 16a has an input port 16a1, the planar semiconductor receiver 16b has an input port 16b1, and the planar semiconductor receiver 16g has an input port 16g1. Reference numerals 16a-in, 16b-in, and 16g-in designate input light beams that enter respective planar semiconductor receivers 16a, 16b, .... 16g.

In Fig. 1, reference numerals 18a, 18b, ...... 18k designate interconnecting pattern elements of the holographic pattern, which, according to the invention, controls directions and properties of the light beams distributed over the entire planar structure of the chip 10 in accordance with the aforementioned holographic pattern. As mentioned above, for simplification of calculations and production, these pattern elements are made in the form of rectangular dashes of the type shown in Fig. 1.

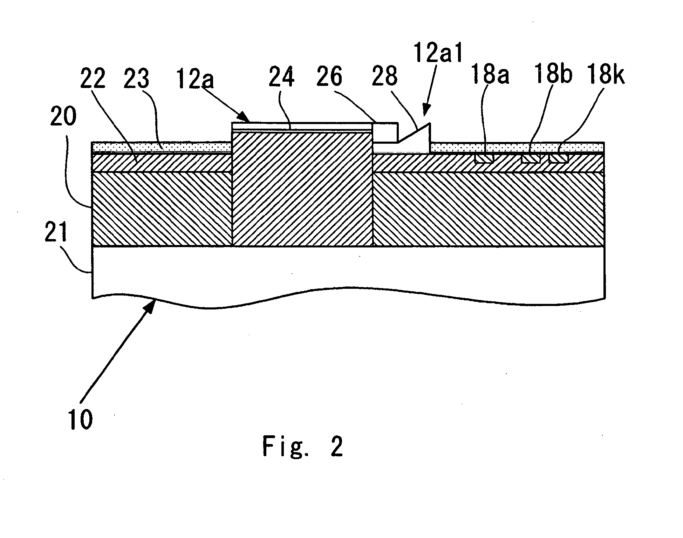

Fig. 1 is a generalized topology of a typical digital planar holographic chip of the present invention that shows arrangement of the optical and holographic elements and interaction therewith. It should be noted that the optical elements of three types shown in Fig. 1 do not limit the scope of the invention and that active and passive elements of other types also may be used, such as frequency multipliers, modulators, attenuators, frequency mixers, etc. More detailed structures of the planar laser diode 12a, a planar semiconductor amplifier 14a, and a planar semiconductor receiver 16a are shown in Figs. 2, 3, and 4, respectively. Since all of the lasers are identical, all of the amplifiers and receivers are identical as well; therefore, only one typical representative of each of these devices is shown in the respective drawings.

As shown in Fig. 2, which is a sectional view through the chip 10 in the direction of the longitudinal axis of the laser diode 12a, the latter is formed on a semiconductor substrate 21 and has a planar optical resonator 24 that emits from its edge (edge-emitting) an optical beam, from which the micro-optical system 26 forms a diffractively limited optical beam. The latter is introduced into the light-propagating and distributing layer 22 that contains the aforementioned elements 18a, 18b, .... 18k of the digital holographic pattern. Reference numeral 28 designates an optical microprism, which together with the micro-optical system 26, forms the aforementioned output port 12a1. The light-propagating and distributing layer 22 is supported by a lower cladding 20 of the holographic chip 10 and is coated with an upper cladding 23. The elements 18a, 18b, .... 18k of the digital holographic pattern are made in flash with the surface of the light-propagating and distributing layer 22. As mentioned above, according to the invention, the respective elements 18a, 18b, .... 18k of the digital holographic pattern have specific refractive indices different from refractive indices of the layers 22 and 23. The geometry and orientations of the aforementioned elements 18a, 18b, .... 18k control the characteristics and directions of the light beams that pass through these elements.

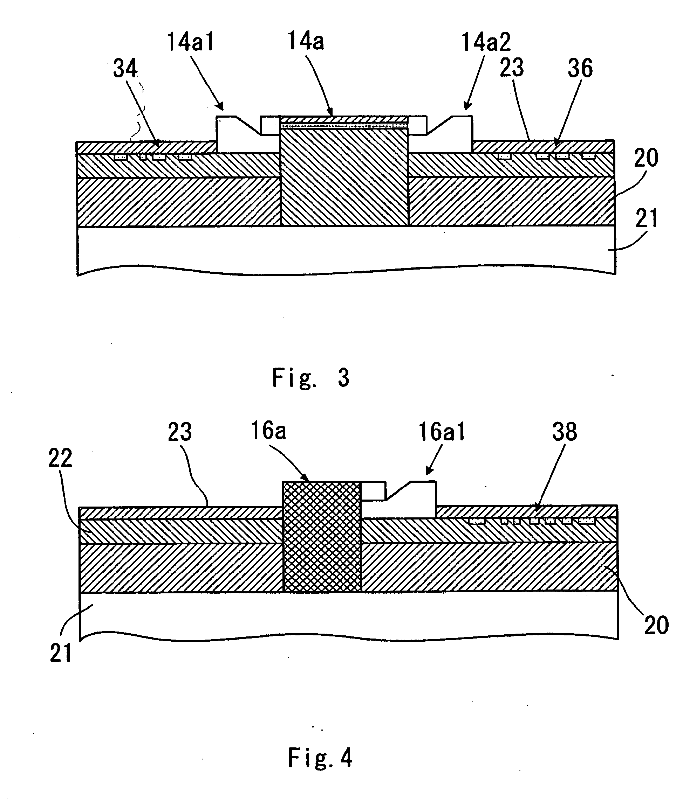

Fig. 3 is a sectional view through the chip 10 in the direction of the longitudinal axis of the semiconductor amplifier 14a. Since the planar semiconductor amplifier 14a is located in the same chip 10, the substrate, cladding layers, etc., will be the same as in the case of the semiconductor laser diode, and their description will be omitted. The difference between the semiconductor amplifier 14a and the semiconductor laser diode 12a is that the amplifier has one input port 14a1 and one output port 14a2. It is understood that the groups 34 and 36 of the elements of the digital holographic pattern will be different from those related to the semiconductor laser diode 12a. In other words, elements of the group 34 participate in control of the input light beam 14a-in (Fig. 1), while elements of the group 36 participate in control of the output light beam 14a-in.

Fig. 4 is a sectional view through the chip 10 in the direction of the longitudinal axis of the planar semiconductor light-beam receiver 16a. Since the planar semiconductor light-beam receiver 16a is located in the same chip 10, the substrate, cladding layers, etc., will be the same as in the case of the semiconductor laser diode, and their descriptions will be omitted. The difference between the semiconductor light-beam receiver 16a and other planar semiconductor optical elements is that the receiver 16a has only one light-receiving port 16a1. It is understood that the group 38 of the elements of the digital holographic pattern will be different from those related to the semiconductor laser diode 12a and the semiconductor amplifier 14a. In other words, elements of the group 38 participate in control of the input light beam 16ain (Fig. 1).

Physically, the aforementioned elements of the digital holographic pattern 18a, 18b, ... 18k (Fig. 1), which include all groups 34, 36, and 38 shown in Figs. 2 and 3, comprise grooves formed in the light-propagating and distributing layer 22, which are filled with an optical material different from the material having a refractive index different from that of other structural layers of the chip 10. The aforementioned elements may also be made in the form of metallic or dielectric stripes, recesses, projections, grooves, etc., or any other elements that can be produced by optical, e-beam, or other type of microlithography, or by nanoprinting on a planar substrate made from, e.g., a semiconductor material. Longitudinal dimensions of the pattern elements 18a, 18b, ... 18k may be in the range from fractions of microns to dozens of microns. Transverse dimensions may range from a fraction of a micron to several microns. It is understood that these ranges are given only as examples.

In operation, pattern elements 18a, 18b, ...... 18k control direction of propagating light, i.e., function in accordance with a given law as $\Delta n = \Delta n(x, y)$. As a result, it becomes possible to replace the continuous function of conversion

of $f_{in}(x,y,\omega)$ into $f_{out}(x,y,\omega)$ by a finite and discrete number of elements (holographic patterns) on a planar substrate.

Thus, it has been shown that the present invention provides a new method of making digital and analog light processors on a single chip consisting of a planar waveguide with several standard elements repeated many times. The invention also provides an integrated planar optical device based on digital planar holography. Approximation of variations in the function of the effective refractive index to the form of a two-level binary function simplifies production and makes it possible to present the elements of the holographic pattern in the form of rectangular elements or dashes that can be easily produced by methods of microlithographic technique. The holographic patterns obtained by the method have an arrangement different from traditional holographic patterns and look like a set of the elements randomly distributed over the plane. However, positions of these elements are most optimal for accomplishing a given task.

Although the invention has been shown and described with reference to specific embodiments, it is understood that these embodiments should not be construed as limiting the areas of application of the invention and that any changes and modifications are possible, provided that these changes and modifications do not depart from the scope of the attached patent claims. For example, the choice of the planar optical elements is not limited by planar laser diodes, planar semiconductor amplifiers, and planar semiconductor receivers, and may include other elements such as planar optical modulators, absorbers, or the like. The interconnecting pattern elements of the holographic pattern may have circular, elliptical, or other forms. The substrate can be made from a semiconductor material other than InPGaAs.

## Claims

1.    A method of digitally processing light waves passing through a planar structure (10) having given functions $f_{in}(x,y,\omega)$ and $f_{out}(x,y,\omega)$ and consisting of a light-propagating and distributing layer (22), a plurality of interconnecting pattern elements (18a, 18b, .... 18k) of a holographic pattern in said of light-propagating and distributing layer (22), and a plurality of planar optical elements (12a, 12b, .......12p) arranged in a predetermined pattern on the aforementioned light-propagating and distributing layer (22), wherein the planar optical elements are selected from planar laser diodes (12a, 12b, .......12p), planar semiconductor amplifiers (14a, 14b,.... 14f), and planar semiconductor receivers (16a, 16b, .... 16g), the method comprising the steps of:

   calculating positions and shapes of the plurality of interconnecting pattern elements (18a, 18b, .... 18k) of a holographic pattern based on the aforementioned given functions $f_{in}(x,y,\omega)$ and $f_{out}(x,y,\omega)$ by a method of solving an inverse problem, said interconnecting pattern elements (18a, 18b, .... 18k) having refractive indices different from the refractive indices of the light-propagating and distributing layer (22), said method comprising the steps of: manufacturing the interconnecting pattern elements (18a, 18b, .... 18k) of the holographic pattern based on the results of the calculations;
   digitizing the aforementioned continuous functions

$$f_{in}(x, y, \omega) \cong \sum_{n,u} C_{nu} \exp(ik_n r_u) f(\omega)$$

   and

$$f_{out}(x, y, \omega) \cong \sum_{m,v} C_{mv} \exp(-ik_m r_v) f(\omega)$$

   by providing finite numbers ("n" , "m", "u", "v") of values as a result of expansion into the Fourier series; where $k_n$ is the wave vector of an incoming wave, and $r_u$ is the distance from the incoming port number u to a current point; and $k_m$ is the wave vector of an outgoing wave, and $r_v$ is the distance from the outgoing port number v to a current point; and
   using the obtained digitized planar holographic pattern for converting the function $f_{in}(x,y,\omega)$ into the function $f_{out}(x,y,\omega)$.

2.    The method of Claim 1, wherein manufacturing is carried out by a method selected from microlithography and nanoprinting.

3. The method of Claim 1, wherein the step of calculating comprises varying the effective refraction index of $\Delta n(x,y)$ of the planar structure (10) for using the effective refraction index of the interconnecting pattern elements (18a, 18b, .... 18k) of the holographic pattern different from the effective refraction index of the light-propagating and distributing layer (22) in order to control directions and properties of the light beams that propagate through the aforementioned planar structure (10) in accordance with the aforementioned holographic pattern.

4. The method of Claim 3, wherein the variation of the effective refractive index $\Delta n(x,y)$ of the planar structure (10) is made in accordance with formula

$$\Delta n(x, y) = \int f_{in}(x, y, \omega) f_{out}(x, y, \omega) d\omega$$

where $f_{in}(x,y,\omega)$ and $f_{out}(x,y,\omega)$ are the same as defined above.

5. The method of Claim 4, wherein variation of the effective refractive index $\Delta_n(x,y)$ is approximated by a two-level binary function to simplify production.

6. The method of claim 5, wherein the aforementioned interconnecting pattern elements (18a, 18b, .... 18k) of the holographic pattern are made in the form of rectangular dashes.

7. An integrated planar optical device (10) having a holographic pattern based on digital planar holography comprising: a semiconductor substrate (21); a lower cladding layer (20) supported by the aforementioned semiconductor substrate; a plurality of planar optical elements (12a, 12b, .......12p) supported by the aforementioned semiconductor substrate (21), wherein the planar optical elements are selected from planar laser diodes (12a, 12b, .......12p), planar semiconductor amplifiers (14a, 14b,.... 14f), and planar semiconductor receivers (16a, 16b, .... 16g); a light-propagating and distributing layer (22) supported by the lower cladding layer (20) and capable of propagating light to and from the aforementioned planar optical elements (12a, 12b, .......12p); interconnecting pattern elements (18a, 18b, .... 18k) of a holographic pattern located in the aforementioned light-propagating and distributing layer (22) and intended for controlling properties and directions of light beams propagating to and from the aforementioned planar optical elements (12a, 12b, .......12p) in accordance with the aforementioned holographic pattern; the light-propagating and distributing layer (22) having a first refractive index, the light-propagating and distributing layer (22) having a second refractive index, the first refractive index and the second refractive index being different in order to determine aforementioned properties and directions of light beams.

8. The integrated planar optical device (10) of Claim 7, wherein the positions and shapes of the interconnecting pattern elements (18a, 18b, .... 18k) of a holographic pattern located in the aforementioned light-propagating and distributing layer (22) are calculated on the basis of given functions $f_{in}(x,y,\omega)$ and $f_{out}(x,y,\omega)$ by a method of solving an inverse problem and by digitizing the aforementioned functions in accordance with the following equations:

$$f_{in}(x, y, \omega) \cong \sum_{n,u} C_{nu} \exp(ik_n r_u) f(\omega)$$

and

$$f_{out}(x, y, \omega) \cong \sum_{m,v} C_{mv} \exp(-ik_m r_v) f(\omega)$$

by providing finite numbers ("n" , "m", "u", "v",) of values as a result of expansion into the Fourier series, where $k_n$ is the wave vector of an incoming wave, and $r_u$ is the distance from the incoming port number u to a current point; $k_m$ is the wave vector of an outgoing wave, and $r_v$ is the distance from the outgoing port number v to a current point.

9. The integrated planar optical device (10) of Claim 7, wherein the positions and shapes of the interconnecting pattern elements (18a, 18b, .... 18k) of a holographic pattern located in the aforementioned light-propagating and distributing layer (22) are calculated on the basis of given functions $f_n(x,y,\omega)$ and $f_{out}(x,y,\omega)$ by a method of solving an inverse problem and by digitizing the aforementioned functions in accordance with the following equations:

$$f_{in}(x,y,\omega) \cong \sum_{n,u} C_{nu} \exp(ik_n r_u) f(\omega)$$

and

$$f_{out}(x,y,\omega) \cong \sum_{m,v} C_{mv} \exp(-ik_m r_v) f(\omega)$$

by providing finite numbers ("n", "m", "u", "v",) of values as a result of expansion into the Fourier series, where $k_n$ is the wave vector of an incoming wave, and $r_u$ is the distance from the incoming port number u to a current point; $k_m$ is the wave vector of an outgoing wave, and $r_v$ is the distance from the outgoing port number v to a current point.

10. The integrated planar optical device (10) of any of Claims 7, 8 or 9, wherein interconnecting pattern elements (18a, 18b, .... 18k) of a holographic pattern are manufactured by a method selected from microlithography and nanoprinting.

11. The integrated planar optical device (10) of any of Claims 8, 9 or 10, wherein the aforementioned interconnecting pattern elements (18a, 18b, .... 18k) of the holographic pattern are made in the form of rectangular dashes.

**Patentansprüche**

1. Verfahren zum digitalen Verarbeiten von Lichtwellen, die durch eine planare Struktur (10) hindurchtreten, die gegebene Funktionen $f_{in}(x,y,\omega)$ und $f_{out}(x,y,\omega)$ hat und aus einer Licht ausbreitenden und verteilenden Schicht (22), mehreren verbindenden Musterelementen (18a, 18b, .... 18k) eines holografischen Musters in der Licht ausbreitenden und verteilenden Schicht (22) und mehreren planaren optischen Elementen (12a, 12b, ......12p) besteht, die in einem vorbestimmten Muster auf der zuvor erwähnten Licht ausbreitenden und verteilenden Schicht (22) angeordnet sind, wobei die planaren optischen Elemente aus planaren Laserdioden (12a, 12b, ...... 12p), planaren Halbleiterverstärkern (14a, 14b, .... 14f) und planaren Halbleiterempfängern (16a, 16b, .... 16g) ausgewählt sind, wobei das Verfahren die folgenden Schritte umfasst:

Berechnen von Positionen und Formen der mehreren verbindenden Musterelemente (18a, 18b, .... 18k) eines holografischen Musters auf Grundlage der zuvor erwähnten gegebenen Funktionen $f_{in}(x,y,\omega)$ und $f_{out}(x,y,\omega)$ durch ein Verfahren zum Lösen eines inversen Problems, wobei die verbindenden Musterelemente (18a, 18b, .... 18k) Brechungsindizes haben, die sich von den Brechungsindizes der Licht ausbreitenden und verteilenden Schicht (22) unterscheiden, wobei das Verfahren die folgenden Schritte umfasst:

Herstellen der verbindenden Musterelemente (18a, 18b, .... 18k) des holografischen Musters auf Grundlage der Ergebnisse der Berechnungen;
Digitalisieren der zuvor erwähnten stetigen Funktionen

$$f_{in}(x,y,\omega) \cong \sum_{n,u} C_{nu} \exp(ik_n r_u) f(\omega)$$

und

$$f_{out}(x,\gamma,\omega) \cong \sum_{m,v} C_{mv} \exp(-ik_m r_v) f(\omega)$$

indem endliche Zahlen ("n", "m", "u", "v") von Werten als ein Ergebnis einer Erweiterung in die Fourier-Reihe bereitgestellt werden; worin $k_n$ der Wellenvektor einer ankommenden Welle und $r_u$ die Strecke von der Ankunftsanschlussnummer u zu einer aktuellen Stelle ist; und $k_m$ der Wellenvektor einer ausgehenden Welle ist; und $r_v$ die Strecke von der Ausgangsanschlussnummer v zu einer aktuellen Stelle ist; und

Verwenden des erhaltenen digitalisierten planaren holografischen Musters, um die Funktion $f_{in}(x,y,\omega)$ in die Funktion $f_{out}(x,y,\omega)$ umzuwandeln.

2. Verfahren nach Anspruch 1, wobei die Herstellung durch ein Verfahren erfolgt, das aus Mikrolithografie und Nanodruck ausgewählt ist.

3. Verfahren nach Anspruch 1, wobei der Berechnungsschritt umfasst, den effektiven Brechungsindex $\Delta n(x,y)$ der planaren Struktur (10) zu verändern, um den effektiven Brechungsindex der verbindenden Musterelemente (18a, 18b, .... 18k) des holografischen Musters, der sich vom effektiven Brechungsindex der Licht ausbreitenden und verteilenden Schicht (22) unterscheidet, zu verwenden, um Richtungen und Eigenschaften der Lichtstrahlen, die sich durch die zuvor erwähnte planare Struktur (10) ausbreiten, in Übereinstimmung mit dem zuvor erwähnten holografischen Muster zu steuern.

4. Verfahren nach Anspruch 3, wobei die Veränderung des effektiven Brechungsindexes $\Delta n(x,y)$ der planaren Struktur (10) in Übereinstimmung mit Formel

$$\Delta n(x,y) = \int f_{in}(x,y,\omega) f_{out}(x,y,\omega) d\omega$$

erfolgt, worin $f_{in}(x,y,\omega)$ und $f_{out}(x,y,\omega)$ dieselben wie vorstehend definiert sind.

5. Verfahren nach Anspruch 4, wobei die Veränderung des effektiven Brechungsindexes $\Delta n(x, y)$ zur Vereinfachung der Produktion durch eine Zweiebenen-Binärfunktion angenähert wird.

6. Verfahren nach Anspruch 5, wobei die zuvor erwähnten verbindenden Musterelemente (18a, 18b, .... 18k) des holografischen Musters in Form von rechteckigen Strichen hergestellt werden.

7. Integrierte planare optische Vorrichtung (10) mit einem holografischen Muster, das auf digitaler planarer Holografie beruht, Folgendes aufweisend: ein Halbleitersubstrat (21); eine untere Mantelschicht (20), die vom zuvor erwähnten Halbleitersubstrat getragen ist; mehrere planare optische Elemente (12a, 12b, ....... 12p), die vom zuvor erwähnten Halbleitersubstrat (21) getragen sind, wobei die planaren optischen Elemente aus planaren Laserdioden (12a, 12b, .....12b), planaren Halbleiterverstärkern (14a, 14b, .... 14f) und planaren Halbleiterempfängern (16a, 16b, .... 16g) ausgewählt sind; eine Licht ausbreitende und verteilende Schicht (22), die von der unteren Mantelschicht (20) getragen und in der Lage ist, Licht zu und von den zuvor erwähnten planaren optischen Elementen (12a, 12b, ..... 12p) auszubreiten; verbindende Musterelemente (18a, 18b, .... 18k) eines holografischen Musters, die in der zuvor erwähnten Licht ausbreitenden und verteilenden Schicht (22) angeordnet und dazu bestimmt sind, Eigenschaften und Richtungen von Lichtstrahlen, die sich zu und von den zuvor erwähnten planaren optischen Elementen (12a, 12b, ..... 12p) ausbreiten, in Übereinstimmung mit dem zuvor erwähnten holografischen Muster zu steuern; wobei die Licht ausbreitende und verteilende Schicht (22) einen ersten Brechungsindex hat, wobei die Licht ausbreitende und verteilende Schicht (22) einen zweiten Brechungsindex hat, wobei sich der erste Brechungsindex und der zweite Brechungsindex unterscheiden, um die zuvor erwähnten Eigenschaften und Richtungen von Lichtstrahlen zu bestimmen.

8. Integrierte planare optische Vorrichtung (10) nach Anspruch 7, wobei die Positionen und Formen der verbindenden Musterelemente (18a, 18b, .... 18k) eines holografischen Musters, die in der zuvor erwähnten Licht ausbreitenden und verteilenden Schicht (22) angeordnet sind, auf Grundlage gegebener Funktionen $f_{in}(x,y,\omega)$ und $f_{out}(x,y,\omega)$ durch

ein Verfahren zum Lösen eines inversen Problems und durch Digitalisieren der zuvor erwähnten Funktionen in Übereinstimmung mit den folgenden Formeln

$$f_{in}(x,\gamma,\omega) \cong \sum_{n,u} C_{nu} \exp(ik_n r_u) f(\omega)$$

und

$$f_{out}(x,\gamma,\omega) \cong \sum_{m,v} C_{mv} \exp(-ik_m r_v) f(\omega)$$

berechnet werden, indem endliche Zahlen ("n", "m", "u", "v") von Werten als ein Ergebnis einer Erweiterung in die Fourier-Reihe bereitgestellt werden; worin $k_n$ der Wellenvektor einer ankommenden Welle und $r_u$ die Strecke von der Ankunftsanschlussnummer u zu einer aktuellen Stelle ist; und $k_m$ der Wellenvektor einer ausgehenden Welle ist; und $r_v$ die Strecke von der Ausgangsanschlussnummer v zu einer aktuellen Stelle ist.

9. Integrierte planare optische Vorrichtung (10) nach Anspruch 7, wobei die Positionen und Formen der verbindenden Musterelemente (18a, 18b, .... 18k) eines holografischen Musters, die in der zuvor erwähnten Licht ausbreitenden und verteilenden Schicht (22) angeordnet sind, auf Grundlage gegebener Funktionen $f_{in}(x,y,\omega)$ und $f_{out}(x,y,\omega)$ durch ein Verfahren zum Lösen eines inversen Problems und durch Digitalisieren der zuvor erwähnten Funktionen in Übereinstimmung mit den folgenden Formeln

$$f_{in}(x,\gamma,\omega) \cong \sum_{n,u} C_{nu} \exp(ik_n r_u) f(\omega)$$

und

$$f_{out}(x,\gamma,\omega) \cong \sum_{m,v} C_{mv} \exp(-ik_m r_v) f(\omega)$$

berechnet werden, indem endliche Zahlen ("n", "m", "u", "v") von Werten als ein Ergebnis einer Erweiterung in die Fourier-Reihe bereitgestellt werden; worin $k_n$ der Wellenvektor einer ankommenden Welle und $r_u$ die Strecke von der Ankunftsanschlussnummer u zu einer aktuellen Stelle ist; und $k_m$ der Wellenvektor einer ausgehenden Welle ist; und $r_v$ die Strecke von der Ausgangsanschlussnummer v zu einer aktuellen Stelle ist.

10. Integrierte planare optische Vorrichtung (10) nach einem der Ansprüche 7, 8 oder 9, wobei verbindende Musterelemente (18a, 18b, .... 18k) eines holografischen Musters durch ein Verfahren hergestellt sind, das aus Mikrolithografie und Nanodruck ausgewählt ist.

11. Integrierte planare optische Vorrichtung (10) nach einem der Ansprüche 8, 9 oder 10, wobei die zuvor erwähnten verbindenden Musterelemente (18a, 18b, .... 18k) des holografischen Musters in Form von rechteckigen Strichen hergestellt sind.

**Revendications**

1. Procédé de traitement numérique d'ondes lumineuses traversant une structure planaire (10) présentant des fonctions

données $f_{in}(x,y,\omega)$ et $f_{out}(x,y,\omega)$ et constituée par une couche de propagation et de distribution de lumière (22), une pluralité d'éléments de motif d'interconnexion (18a, 18b, .... 18k) d'un motif holographique dans ladite couche de propagation et de distribution de lumière (22), et une pluralité d'éléments optiques planaires (12a, 12b, ....... 12p) disposés dans un motif prédéterminé sur la couche de propagation et de distribution de lumière (22) susmentionnée, sachant que les éléments optiques planaires sont sélectionnés parmi des diodes laser planaires (12a, 12b, ....... 12p), des amplificateurs semiconducteurs planaires (14a, 14b, .... 14f), et des récepteurs semiconducteurs planaires (16a, 16b, .... 16g), le procédé comprenant les étapes consistant à :

calculer des positions et des formes de la pluralité d'éléments de motif d'interconnexion (18a, 18b, .... 18k) d'un motif holographique sur la base des fonctions données $f_{in}(x,y,\omega)$ et $f_{out}(x,y,\omega)$ susmentionnées moyennant un procédé de résolution d'un problème inverse, lesdits éléments de motif d'interconnexion (18a, 18b, .... 18k) ayant des indices de réfraction différents des indices de réfraction de la couche de propagation et de distribution de lumière (22), ledit procédé comprenant les étapes consistant à :

fabriquer les éléments de motif d'interconnexion (18a, 18b, .... 18k) du motif holographique sur la base des résultats des calculs ;
numériser les fonctions continues susmentionnées

$$f_{in}(x,\gamma,\omega) \cong \sum_{n,u} C_{nu} \exp(ik_n r_u) f(\omega)$$

et

$$f_{out}(x,\gamma,\omega) \cong \sum_{m,v} C_{mv} \exp(-ik_m r_v) f(\omega)$$

en fournissant des nombres finis ("n", "m", "u", "v") de valeurs comme résultat d'un développement en la série de Fourier ; où $k_n$ est le vecteur d'onde d'une onde entrante, et $r_u$ est la distance du nombre de port entrant u à un point actuel ; et $k_m$ est le vecteur d'onde d'une onde sortante, et $r_v$ est la distance d'un nombre de port sortant v à un point actuel ; et
utiliser le motif holographique planaire numérisé obtenu pour convertir la fonction $f_{in}(x,y,\omega)$ en la fonction $f_{out}(x,y,\omega)$.

**2.** Le procédé de la revendication 1, dans lequel la fabrication est effectuée moyennant un procédé sélectionné parmi la microlithographie et la nano-impression.

**3.** Le procédé de la revendication 1, dans lequel l'étape de calcul comprend le fait de faire varier l'indice de réfraction effectif $\Delta n(x,y)$ de la structure planaire (10) pour utiliser l'indice de réfraction effectif des éléments de motif d'interconnexion (18a, 18b, .... 18k) du motif holographique différent de l'indice de réfraction effectif de la couche de propagation et de distribution de lumière (22) afin de commander des directions et propriétés des faisceaux lumineux qui se propagent à travers la structure planaire (10) susmentionnée conformément au motif holographique susmentionné.

**4.** Le procédé de la revendication 3, dans lequel la variation de l'indice de réfraction effectif $\Delta n(x, y)$ de la structure planaire (10) s'effectue conformément à la formule

$$\Delta n(x, y) = \int f_{in}(x, y, \omega) f_{out}(x, y, \omega) d\omega$$

où $f_{in}(x,y,\omega)$ et $f_{out}(x,y,\omega)$ sont les mêmes que celles définies ci-dessus.

**5.** Le procédé de la revendication 4, dans lequel la variation de l'indice de réfraction effectif $\Delta n(x, y)$ est approximée par une fonction binaire à deux niveaux pour simplifier la production.

6. Le procédé de la revendication 5, dans lequel les éléments de motif d'interconnexion (18a, 18b, .... 18k) susmentionnés du motif holographique sont constitués en forme de tirets rectangulaires.

7. Dispositif optique planaire intégré (10) présentant un motif holographique sur la base d'une holographie planaire numérique comprenant : un substrat semiconducteur (21) ; une couche de revêtement inférieure (20) supportée par le substrat semiconducteur susmentionné ; une pluralité d'éléments optiques planaires (12a, 12b, ....... 12p) supportés par le substrat semiconducteur (21) susmentionné, sachant que les éléments optiques planaires sont sélectionnés parmi des diodes laser planaires (12a, 12b, ....... 12p), des amplificateurs semiconducteurs planaires (14a, 14b, .... 14f), et des récepteurs semiconducteurs planaires (16a, 16b, .... 16g) ; une couche de propagation et de distribution de lumière (22) supportée par la couche de revêtement inférieure (20) et capable de propager de la lumière vers et à partir des éléments optiques planaires (12a, 12b, ....... 12p) susmentionnés ; des éléments de motif d'interconnexion (18a, 18b, .... 18k) d'un motif holographique situés dans la couche de propagation et de distribution de lumière (22) susmentionnée et destinés à commander des propriétés et directions de faisceaux lumineux se propageant vers et à partir des éléments optiques planaires (12a, 12b, ....... 12p) susmentionnés conformément au motif holographique susmentionné ; la couche de propagation et de distribution de lumière (22) présentant un premier indice de réfraction, la couche de propagation et de distribution de lumière (22) présentant un deuxième indice de réfraction, le premier indice de réfraction et le deuxième indice de réfraction étant différents afin de déterminer les propriétés et directions susmentionnées des faisceaux lumineux.

8. Le dispositif optique planaire intégré (10) de la revendication 7, dans lequel les positions et formes des éléments de motif d'interconnexion (18a, 18b, .... 18k) d'un motif holographique situés dans la couche de propagation et de distribution de lumière (22) susmentionnée sont calculés sur la base de fonctions données $f_{in}(x,y,\omega)$ et $f_{out}(x,y,\omega)$ moyennant un procédé de résolution d'un problème inverse et par numérisation des fonctions susmentionnées conformément aux équations suivantes :

$$f_{in}(x,\gamma,\omega) \cong \sum_{n,u} C_{nu} \exp(ik_n r_u) f(\omega)$$

et

$$f_{out}(x,\gamma,\omega) \cong \sum_{m,v} C_{mv} \exp(-ik_m r_v) f(\omega)$$

en fournissant des nombres finis ("n", "m", "u", "v") de valeurs comme résultat d'un développement en la série de Fourier, où $k_n$ est le vecteur d'onde d'une onde entrante, et $r_u$ est la distance du nombre de port entrant u à un point actuel ; et $k_m$ est le vecteur d'onde d'une onde sortante, et $r_v$ est la distance d'un nombre de port sortant v à un point actuel.

9. Le dispositif optique planaire intégré (10) de la revendication 7, dans lequel les positions et formes des éléments de motif d'interconnexion (18a, 18b, .... 18k) d'un motif holographique situés dans la couche de propagation et de distribution de lumière (22) susmentionnée sont calculés sur la base de fonctions données $f_{in}(x,y,\omega)$ et $f_{out}(x,y,\omega)$ moyennant un procédé de résolution d'un problème inverse et par numérisation des fonctions susmentionnées conformément aux équations suivantes :

$$f_{in}(x,\gamma,\omega) \cong \sum_{n,u} C_{nu} \exp(ik_n r_u) f(\omega)$$

et

$$f_{out}(x, \gamma, \omega) \cong \sum_{m,v} C_{mv} \exp(-ik_m r_v) f(\omega)$$

en fournissant des nombres finis ("n", "m", "u", "v") de valeurs comme résultat d'un développement en la série de Fourier, où $k_n$ est le vecteur d'onde d'une onde entrante, et $r_u$ est la distance du nombre de port entrant u à un point actuel ; $k_m$ est le vecteur d'onde d'une onde sortante, et $r_v$ est la distance du nombre de port sortant v à un point actuel.

10. Le dispositif optique planaire intégré (10) de l'une quelconque des revendications 7, 8 ou 9, dans lequel des éléments de motif d'interconnexion (18a, 18b, .... 18k) d'un motif holographique sont fabriqués moyennant un procédé sélectionnés parmi la microlithographie et la nano-impression.

11. Le dispositif optique planaire intégré (10) de l'une quelconque des revendications 8, 9 ou 10, dans lequel les éléments de motif d'interconnexion (18a, 18b, .... 18k) susmentionnés du motif holographique sont constitués en forme de tirets rectangulaires.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070034730 A, T. Mossberg
- US 20060233493 A, T. Mossberg
- US 20070053635 A, D. Iazikov
- US 20060126992 A, T. Hashimoto
- US 20040036933 A, V. Yankov
- US 7511805 B2